# EUROPEAN PATENT SPECIFICATION

(11) **EP 2 234 777 B1**
(45) Date of publication and mention of the grant of the patent: **03.08.2011**
(21) Application number: 08713587.7
(22) Date of filing: 04.01.2008
(51) Int. Cl.: B25H 1/00, E21B 7/02, F16C 29/00

(54) **Drill column for a drill stand**
Bohrsäule für einen Bohrständer
Colonne de perçage pour un support de perceuse

(43) Date of publication of application: 06.10.2010
(73) Proprietor: Husqvarna Professional Outdoor Products Inc., Charlotte, NC 28269 (US)
(72) Inventor: BARATTA, Anthony, Oak Park CA 91377 (US)
(74) Representative: Jacobsson, Peter
(86) International application number: PCT/US2008/050320
(87) International publication number: WO 2009/088499

(56) References cited:
- DE-A- 3 629 368
- DE-U- 9 204 693
- DE-U- 9 406 622
- US-A- 3 093 249
- US-A1- 2003 233 925

## Description

### Technical Field

The present invention relates to a drill column for a drill stand according to the preamble of claim 1. The drill stand is designed to be used with a drill motor and a core drill and to normally be fixedly fastened to a floor or wall using either an expander bolt or vacuum. In the latter case, a vacuum cap and gasket are applied to the expander bolt aperture. The drill stand preferably has a back support clamped to its drill stand. Such a drill column is known from DE 94 06 622 U1.

### Background of the Invention

When core drilling in concrete, asphalt, brickwork or similar building materials, a drill stand is usually used. The drill stand is mounted via anchor bolt(s) or vacuum. Usually the drilling is done in a floor or a wall using a drill bit to prepare a hole with a diameter of approximately 100-200 mm, and up to 600 mm and more. It is often necessary to drill either a straight or angled hole. Therefore a special kind of drill stand has a drill column that can be tilted, usually from zero degrees to forty-five degrees. The drill column is often fixed with a tiltable back support that is slidably connected to the drill column and is locked to the column in a suitable position by a clamping arrangement.

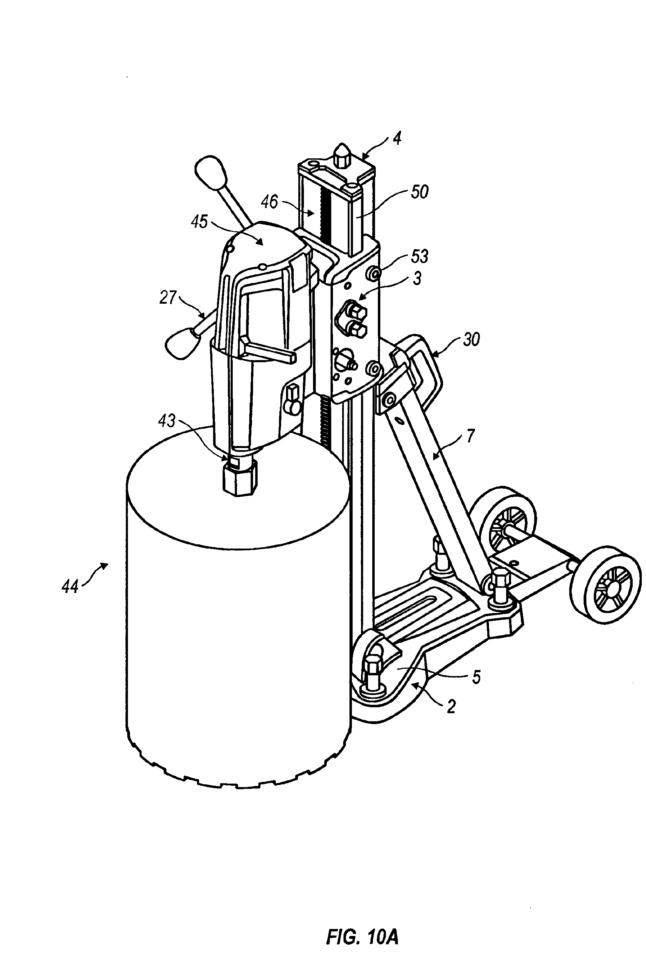

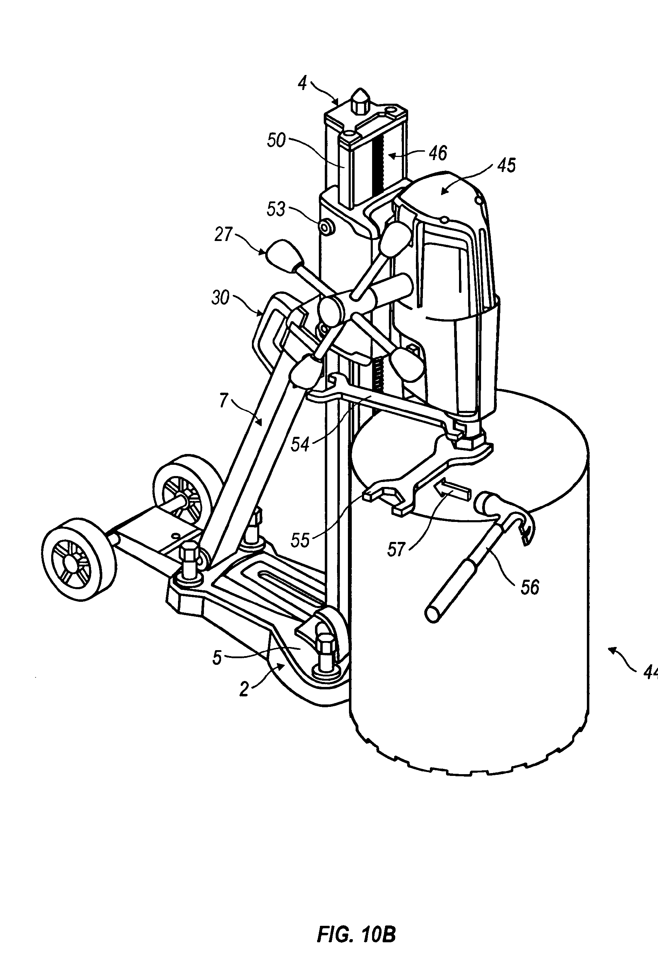

The drill bit is attached to the drill motor by means of a drill chuck. During normal use, the drill bit can become locked tightly to the chuck, thus making it difficult to remove the bit. Frequently, the bit is removed by an operator by rotationally securing the bit using a first wrench, the handle of which is rotated around, with the bit, until resting up against the supporting drill column. A second wrench is then used to loosen the chuck by applying torque against the "blocked" bit (see Fig. 10B). It is often necessary to strike the second wrench with a hammer because of how tightly the bit is locked in the chuck. Thus the act of removing the drill bit causes a great deal of force to be applied against the outermost edge of the drill column through the first wrench's handle. For the most part, this is a reasonably concentrated force, even though the strike-distance is not very much since the first wrench handle stays reasonably proximate the column during the loosening process. Over time, however, the repeated impacts imposed by the wrench handle frequently damage the the drill column causing dents, deformations and a general deterioration of the integrity and shape of the column which eventually has the potential for rendering the drill column unusable. It is therefore an object of the prsently disclosed invention(s) to protect the drill column by providing its left and right sides with slots to accept protective rubber, plastic or otherwise resiliently constructed replaceable strips or shields.

The drill motor and bit are connected to the drill column via the drill carriage. The drill carriage has front and back rollers which abut tracks on the drill column. During normal use, the drill carriage is subject to multi-directional forces (twists, torques and laterally applied forces) during drilling, during the raising and lowering of the carriage along the drill column, and during the installation and removal of the drill bit from the chuck. At least one object of the present disclosure is to provide a carriage-column interface stabalized against these applied multi-directional forces. According to the disclosure, one of the pairs of tracks, either the front or the back, is V-shaped, while the other, opposing pair is flat-shaped. The corresponding rollers are also flat. The flat shaped rollers allow for increased contact surface between the rollers and column, and hence the forces acting against the column are distributed over a greater area.. The greater surface area between the column and the rollers makes the carriage more secure and stable and better able to cope with the multidirectional forces described above.

To allow the drill carriage to rest more securely on the column during drilling, the back rollers may be eccentric rollers. If utilized, the eccentric rollers permit forward and back adjustment of the position of those rollers, and hence permits the user to compensate for minor variations in manufacture and wear during the products life.

### Summary of the Invention

The present invention provides a drill column for a drill stand according to claim 1. As noted in the background above, the lateral edges of the drill column are often subject to extreme forces during removal of the bit from the chuck. To protect these edges, the present invention provides for bumper receivers or slots running the length of the drill column and into which elongate bumpers are installed. These bumpers, which can be made of plastic, rubber or other resilient material, can be removed and replaced when they become worn.

### Brief Description of the Drawings

The invention(s) will be described in greater detail in the following through various exemplary embodiments, and with reference to the accompanying drawings wherein like reference numerals have been used in the various figures to denote corresponding components. Additional embodiments and features of the presently disclosed drill stand and its included components are shown in United States Design Patent Application Number 29/299,852, filed 4 January 2008. The accompanying drawing figures are described as follows:
FIG. 1 is a front perspective view of a drill stand including a drill column that is configured according to the present invention.
FIG. 2 is an exploded perspective view of the drill stand of Fig. 1.
FIG. 3 is a top perspective view of a drill stand including a drill column that is configured according to the present invention.
FIG. 4 is an enlarged view of the encircled area in Fig. 3 showing the clamping arrangement between the back support and the drill column.
FIG. 5 is the top perspective view of the drill stand as in Fig. 3, but the back support has been removed.
FIG. 6 is an enlarged view of the encircled area in Fig. 5 showing the clamping arrangement without the back support.
FIG. 7 is an exploded perspective view of the clamping arrangement and the back support of the drill stand shown in Fig. 2.
FIG. 8 is a top perspective view of the back support and the clamping arrangement.
FIG. 9 is an enlarged view of the encircled area in Fig. 8 showing the clamping arrangement attached to the back support.
FIG. 10A is a right side perspective view of a drill stand with a drill motor housing, drill chuck and drill bit shown.
FIG. 10B is a left side perspective view of the drill stand with two wrenches applied and a hammer posed for breaking loose a chuck-stuck drill bit.
FIG. 11 is a left side elevational view of the drill stand of Fig. 10.
FIG. 12 is a top plan view of the carriage and drill column, but with a top cap of the carriage removed to expose the interior thereof.
FIG. 13 is a top plan view of the drill column showing the cross sectional shape of the column and a pair of protective bumpers.
FIG. 14 is a perspective view of an eccentric roller.
FIG. 15 is a right side elevational view of the eccentric roller of Fig. 14.

### Description of preferred embodiments

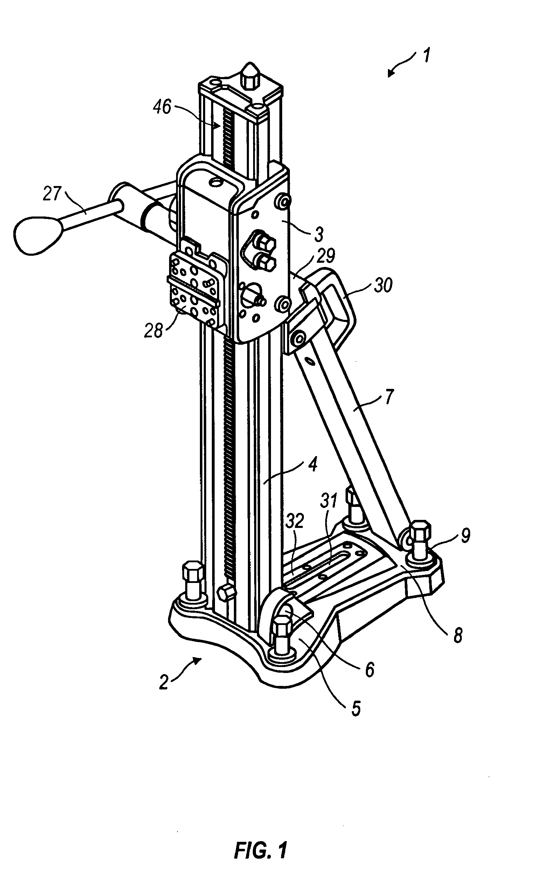

FIG. 1 shows a drill column 4 for drill stand 1 constituting one preferred embodiment of the present invention. The drill stand 1 comprises a base plate 2, which is adapted to be fastened to a floor or a wall, either by using an expander bolt or using a vacuum system. Also, the drill stand comprises a carriage 3, arranged on a drill column 4 and adapted to carry a drill motor. The carriage 3 is provided with a feeder handle 27 for moving the carriage along the drill column 4 and a motor connection part 28 for attachment of the drill motor. The carriage 3 contains at least one pair of back rollers 52 and at least one pair of front rollers 51 that are used to adjustably mount the carriage 3 to the drill column 4.

The drill column 4 is pivotally mounted to a front part 5 of the base plate 2 and turns around a drill column axle 6. Also, the drill column 4 is supported by a back support 7, which is pivotally mounted to a back part 8 of the base plate 2 and turns around a back support axle 9. A longitudinal direction is defined as a direction running through the centers of the drill column 4 and the back support 7 either from the front to the back part of the base plate, or vice versa. The drill column axle 6 and the back support axle 9 are essentially parallel and run in a lateral direction; i.e., lateral in relation to the longitudinal direction. The back support 7 is attached to the drill column 4 by means of a clamping arrangement 29. On the rear side of the back support 7 a carry handle 30 for transportation of the drill stand 1 is provided.

The base plate 2 is provided with an expander bolt aperture 31, extending in a longitudinal direction and used for fastening the base plate 2 in a floor or in a wall. The aperture 31 is arranged such that an anchor bolt is anchored to the floor or wall and can extend from the floor or wall and up through the aperture 31. The base plate 2 can be fastened to the floor by means of a nut, which is screwed on to the protruding part of the anchor bolt and tightened against the base plate 2. Alternatively, a vacuum lock can be used.

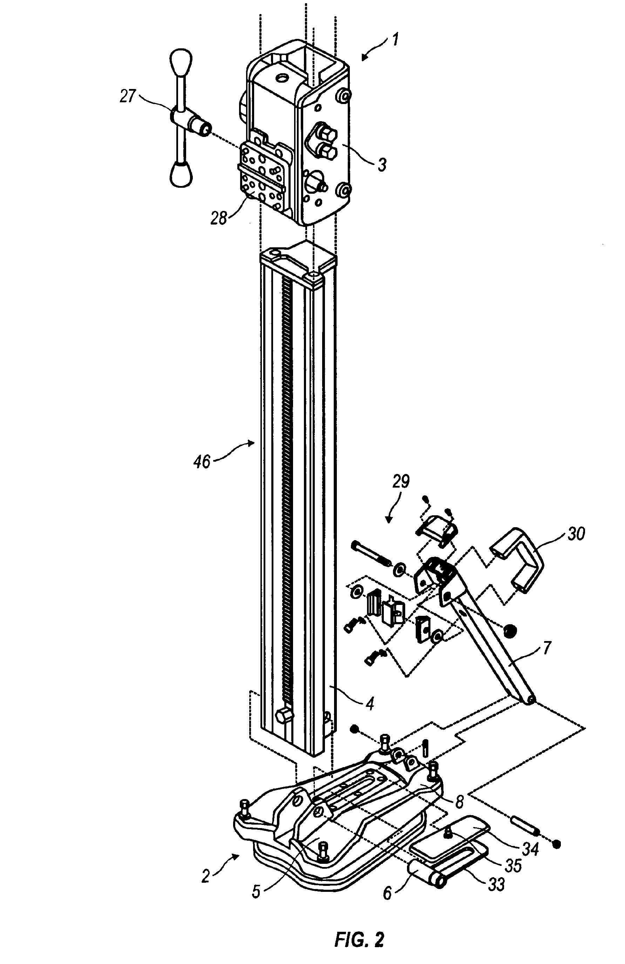

A slot guard 32 is provided around the expander bolt aperture and is sealingly applied to the base plate 2. The slot guard 32 is made of steel and is more scratch resistant than the base plate 2, which is usually made of aluminium. Thereby the slot guard 32 provides a more reliable seal for the vacuum locking than the prior art solutions. This is because the top surface of the slot guard is provided with a gasket 33 for sealing between the slot guard and a vacuum cap 34 when using vacuum locking (see FIG. 2). Preferably, a surface coating is provided on at least the top surface of the slot guard to provide improved scratch resistance. For this, a hard metal coating like nickel can be used.

FIG. 2 shows an exploded view of the drill stand 1 depicted in FIG. 1. In addition to the components shown in FIG. 1, FIG. 2 also depicts the gasket 33, the vacuum cap 34 and a vacuum quick disconnect 35 which are used for obtaining a vacuum locking of the base plate 2 against a surface.

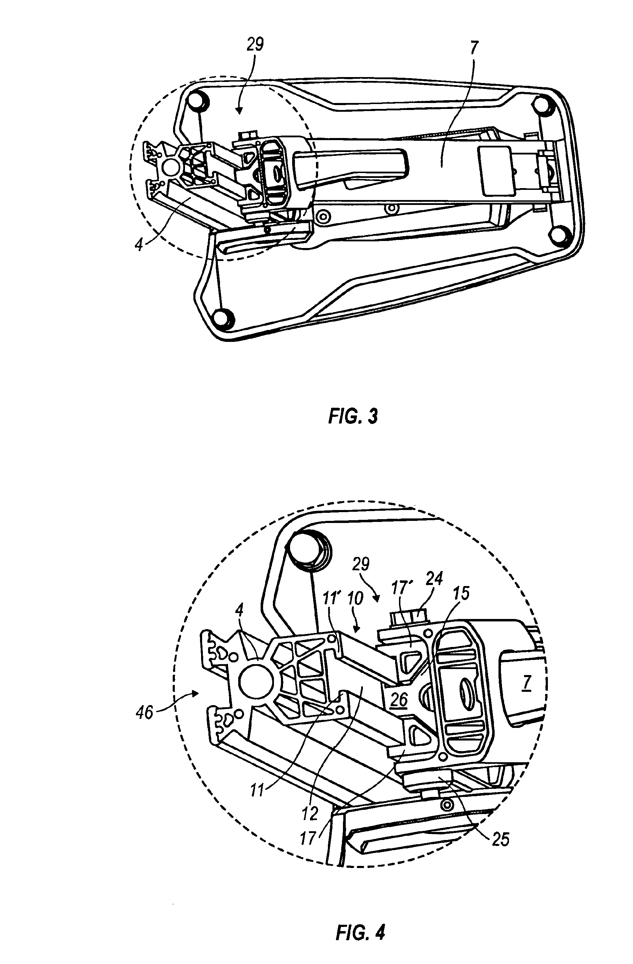

FIG. 3 shows the back support 7 attached to the drill column 4 by means of a clamping arrangement 29.

FIG. 4 depicts the clamping arrangement 29 between the back support 7 and the drill column 4. The back side of the drill column 4 is arranged as a track 10 having lateral wings 11, 11', a right wing 11 and a left wing 11', as seen from the front side of the drill stand 4. Each wing 11, 11' extends laterally from outside and inwards, but are separated by an elongate opening 12. The clamping arrangement 29 comprises a center clamp 15, which has a flange part 26 fitting in the elongate opening of the drill column 4, and two outer clamps, right 17 and left 17'. A clamping element 24, 25 is provided for pressing the outer clamps 17, 17' laterally together against the center clamp. The clamping arrangement 29 is connected both to the back support 7 and to the track 10, so as to fix the back support 7 to the drill column 4 in different positions along the track 10 by clamping.

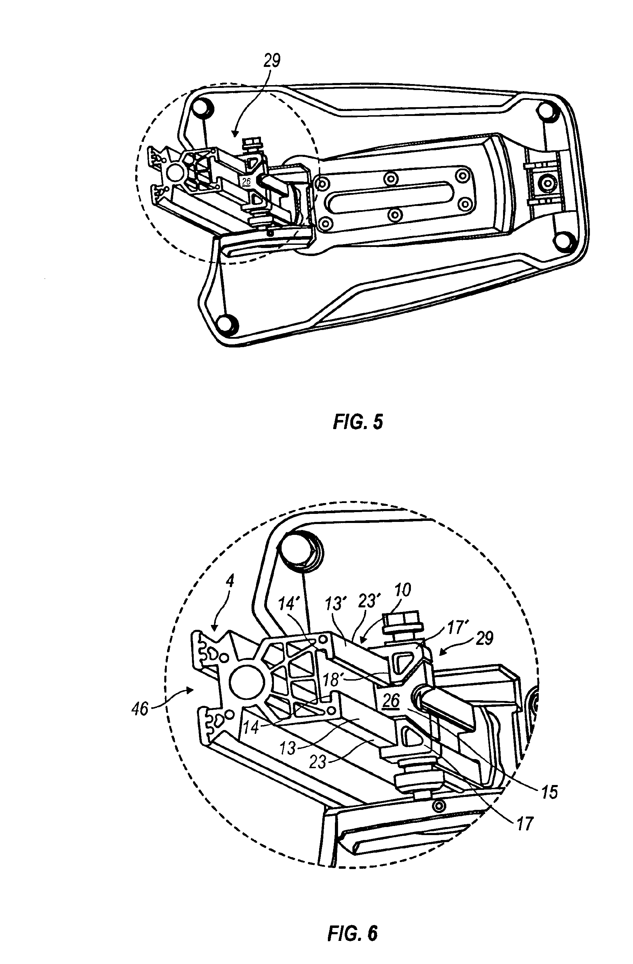

FIG. 5 shows a perspective view of the drill stand where the back support has been removed to more clearly show the clamping arrangement 29.

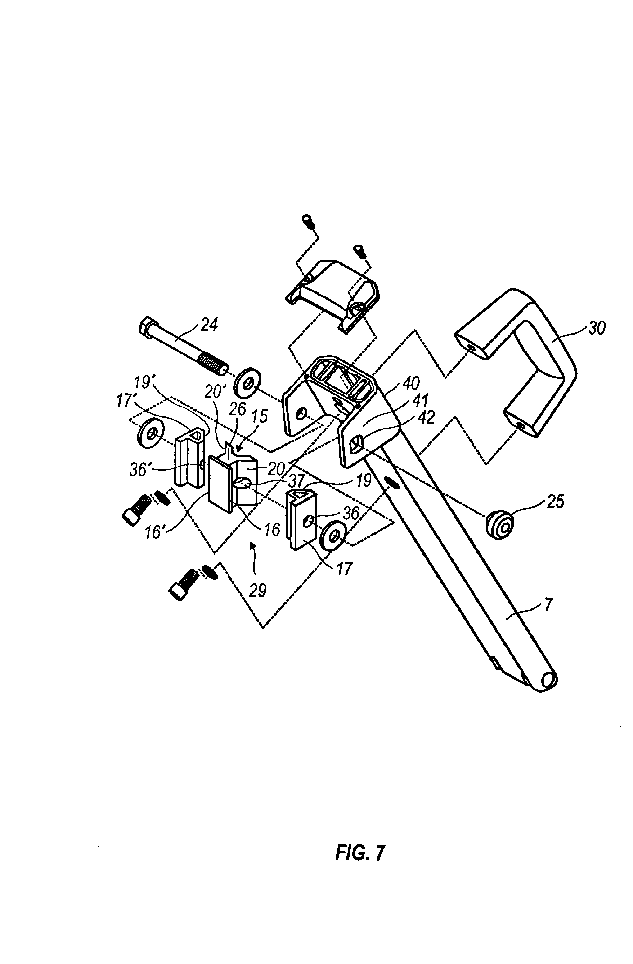

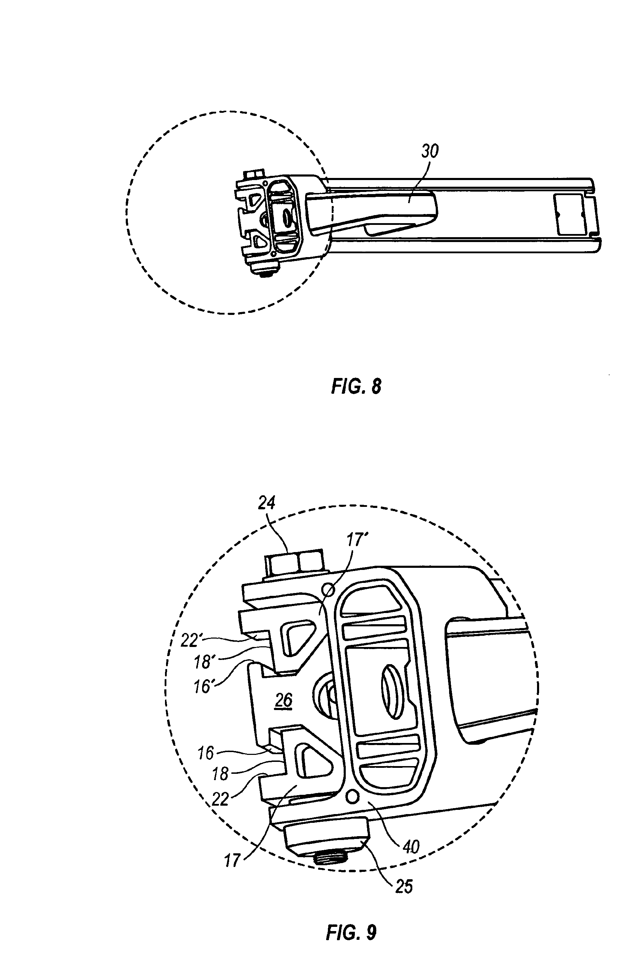

FIG. 6 shows the clamping arrangement 29 mounted on the drill column 4. FIG. 7 shows the clamping arrangement 29 and the back support 7 in an exploded view. FIG. 9 shows the clamping arrangement mounted in the back support 7. By comparing FIGS. 6, 7 and 9 the following description is best understood.

Each of the outer clamps 17, 17' has a lateral contact surface 18, 18', arranged to contact the respective outside rear surface 13, 13' of the track 10. Each outer clamp 17, 17' is arranged outside of the center clamp 15 and has an outer angled contact element 19, 19', intended to cooperate with center angled contact elements arranged on the center clamp 15. Preferably, the outer angled contact elements 19, 19' and the center angled contact elements are provided in the form of angled surfaces, i.e. surfaces that neither run in a longitudinal nor in a lateral direction, but in an intermediate direction. However, it should be noted that in alternative embodiments either the center angled contact elements or the outer angled contact elements 19, 19' could be provided in the form of something else than angled surfaces. For example, one or both of the center angled contact elements could be provided as having a contact area in the form of a bump of various shape. The contact area could be part of a rotatable body like a roller; e.g., using ball or roller bearings to reduce friction. The foregoing could also apply to one or both of the contact areas of the outer angled contact elements 19, 19'. Preferably, the outside rear surfaces 13, 13' as well as the inside forward surfaces 14, 14' of the track 10 run in an essentially lateral direction.

The center clamp 15 has protrusions, right 16 and left 16', extending laterally from the flange part 26 and intended to contact the inside forward surfaces 14, 14' of the track 10. The outer clamps, right and left 17, 17' have longitudinal contact surfaces, right and left 22, 22' contacting a longitudinal outside contact surface, right and left 23, 23' of the track 10 or drill column 4.

When the clamping element 24, 25 presses the outer clamps 17, 17' together in a lateral direction against the center clamp 15, the outer angled contact elements 19, 19' of the outer clamps cooperate with center angled contact elements providing a longitudinal backwards motion of the center clamp 15 in relation to the outer clamps 17, 17'. Thereby, the protrusions 16, 16' of the center clamp 15 are pressed against the inside forward surfaces 14, 14' and the lateral contact surfaces 18, 18' of the outer clamps are pressed against the outside rear surfaces 13, 13'. This way a clamping in a longitudinal direction is provided. If the outer clamps 17, 17' are also provided with longitudinal contact surfaces 22, 22', a clamping also in the lateral direction is possible. This provides a further improved embodiment having clamping in both a longitudinal and a lateral direction. Therefore, when the outer clamps 17, 17' are pressed together, the longitudinal contact surfaces 22, 22' of the outer clamps are pressed against the outside contact surfaces 23, 23' of the track 10 or the drill colunm 4, providing a clamping in a lateral direction.

Preferably, the clamping element 24, 25 comprises a clamping screw 24 and a lock nut 25. The clamping screw 24 is adapted to be fastened to the back support 7 and to run through holes 36, 36' in the outer clamps 17, 17' and through a hole 37 in the center clamp 15. The lock nut 25 is arranged to press against either of the outer clamps 17, 17'; i.e., the nut could be located either on the right or left side of the drill stand 1.

The clamping screw 24 can be fastened to the back support 7 by being led through a clamping screw hole in a first tongue of a clamping fork 40 and further on through a lock nut aperture 42 in a second tongue 41 of the fork, and being secured in a lock nut 25. The lock nut aperture 42 is adapted to prevent the nut 25 from rotating but also to enable it to at least partly move through the aperture 42 and press against either of the outer clamps 17, 17'.

The clamping element 24, 25 could also be a tensioning device with a rod having a head in one end and quick tensioner in the other, like a cam rotatable around an axis lateral to the length axis of the rod and the cam supplied with a handle for quick tensioning without tools.

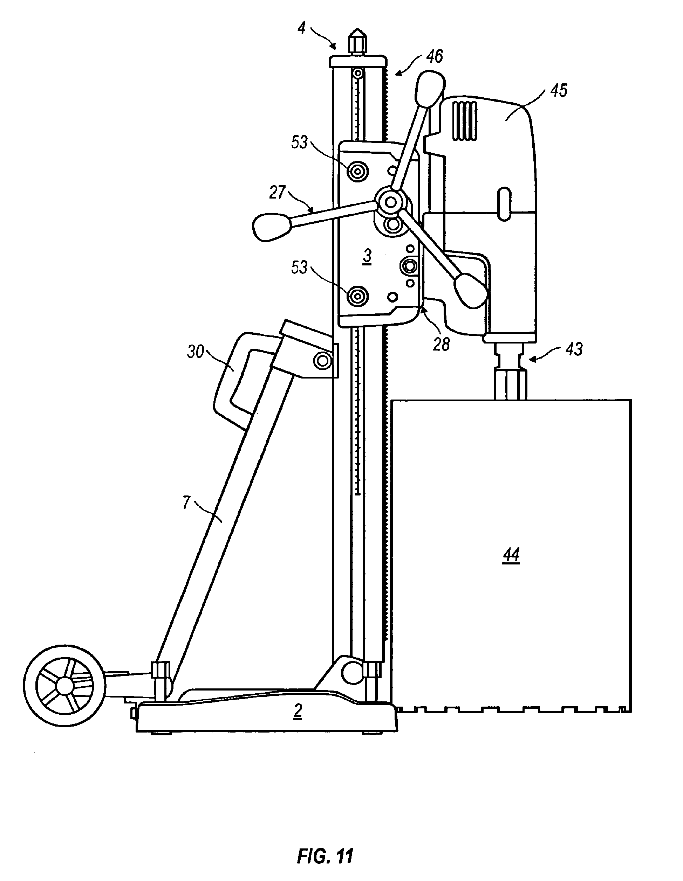

Referring particularly to Figs. 1, 2, 10A, 10B and 11, a vertically oriented drill column is shown as a component of a drill stand 1. The drill column includes an elongate drill column body 4 that has a lengthwise oriented longitudinal axis. A lower end of the drill column body 4 is shown configured to be pivotally mounted to a base plate 5 and a front portion 46 of the drill column body 4 is configured to receive a longitudinally reciprocating drill carriage 3.

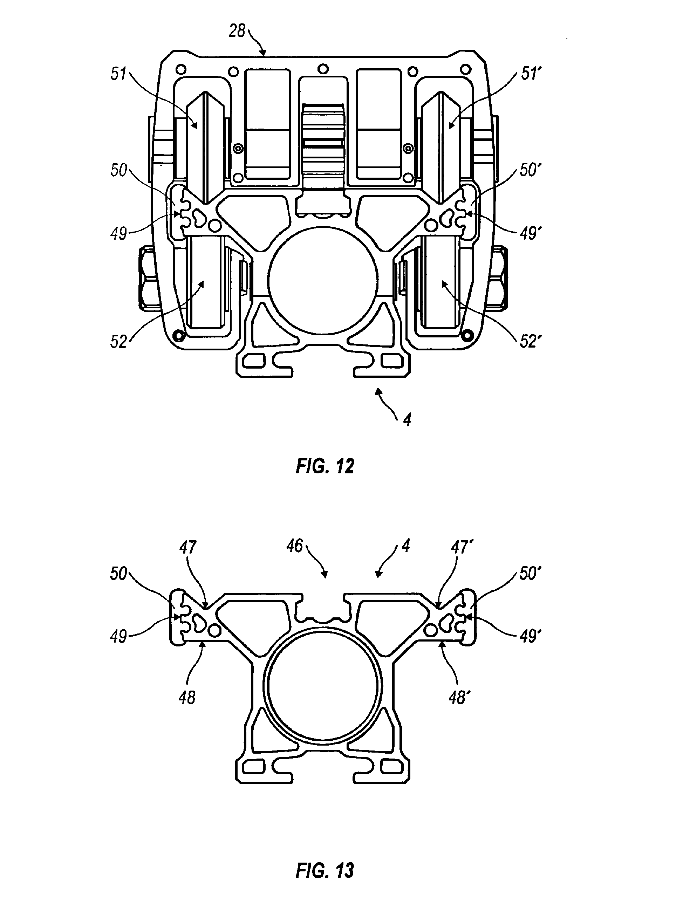

The profile of the elongate drill column body 4 is shown in the top plan view of Fig. 13 and comprises (includes, but is not necessarily limited to) a first pair of longitudinally oriented roller tracks 47 formed in a forward surface 46 of the elongate body (the surface extending down, into the paper at the top edge of the illustration of Fig. 13). A second pair of longitudinally oriented roller tracks 48 is opposingly arranged relative the first pair of roller tracks 47 and is located rearward of the first pair of roller tracks 47 (downward from the forward surface as illustrated in Fig. 13).

A pair of longitudinally elongate, laterally projecting extremities are formed as portions of the drill column body 4. Preferably, and as illustrated in Figs. 12 and 13, the drill column body 4 is formed as an extrusion and is beneficially constructed from aluminum. Each of the laterally projecting extremities is interposed between one track of the first pair of roller tracks 47 and one track of the second pair of roller tracks 48. Each of the pair of extremities has an elongate, longitudinally oriented, outboard side that constitutes a lateral-most portion of the elongate body. A bumper receiver 49 is formed at (in) each of these outboard sides of the drill column body 4. Each bumper receiver 49 is configured to position a bumper 50 that is installed therein as a protective side-cap against damaging side impacts to the drill column 4. As described above, and illustrated in Fig. 10B, an example of potentially damaging impacts comes from wrench strikes when breaking loose a drill bit 44 after use that has caused the bit 44 to bind in the chuck 43.

As depicted in Fig. 13, at least one, and advantageously exactly one, of the first and second pairs of longitudinally oriented roller tracks 47, 48 takes the form of a pair of generally V-shaped roller tracks. In a particularly preferred embodiment, and that which is illustrated, it is the first pair of longitudinally oriented roller tracks 47 that comprises the pair of generally V-shaped roller tracks. Further, the other of the first 47 and second pair 48 of longitudinally oriented roller tracks comprises a pair of generally flat-shaped roller tracks. As may be appreciated in Fig. 13, the first 47 and second pair of longitudinally oriented roller tracks 48 each has a generally equal widthwise spacing between the two roller tracks constituting the respective pair of roller tracks. Still further, the first 47 and second pair 48 of longitudinally oriented roller tracks are oriented one behind the other, relative the forward surface of the elongate drill column body 46.

Each bumper receiver 49 comprises at least one elongate slot, and preferably a pair of elongate slots recessed into an incorporating extremity. As shown, each elongate slot has an elongate slit-opening at a respective outboard side of the incorporating extremity.

The drill column 4 further includes an elongate bumper 50 having an insert portion configured for installation into the bumper receiver 49. As illustrated, the insert portion of the elongate bumper 50 is installed in a bumper receiver 49 and the bumper 50 further includes a shield portion constituting a protective side-cap to the extremity that incorporates the particular bumper receiver 49.

The elongate bumper 50 is constructed from a resilient polymer material that extends along an upper portion of the drill column 4. In increasingly preferred embodiments, the coverage extends along (i) at least a half of the length of the drill column 4, (ii) at least three-quarters of the length of the drill column 4 and (iii) a substantial entirety of the length of the drill column 4.

As depicted in detail in Fig. 12, the drill column 4 further comprises a drill carriage 3 that is reciprocatively mounted on the drill column body 4. The drill carriage 3 includes a first pair of rollers 51 engaged upon the first pair of longitudinally oriented roller tracks 47 and a second pair of rollers 52 engaged upon the second pair of longitudinally oriented roller tracks 48. In this configuration, each of the laterally projecting extremities is interposed between one roller of the first pair of rollers 51 and one roller of the second pair of rollers 52.

For correspondence with the engaged track, each of the rollers of the first pair of rollers 51 1 has a generally V-shaped track engagement portion in a radial cross-sectional view. Further, each of the rollers of the second pair of rollers 52 has a generally flat-shaped track engagement portion in a radial cross-sectional view.

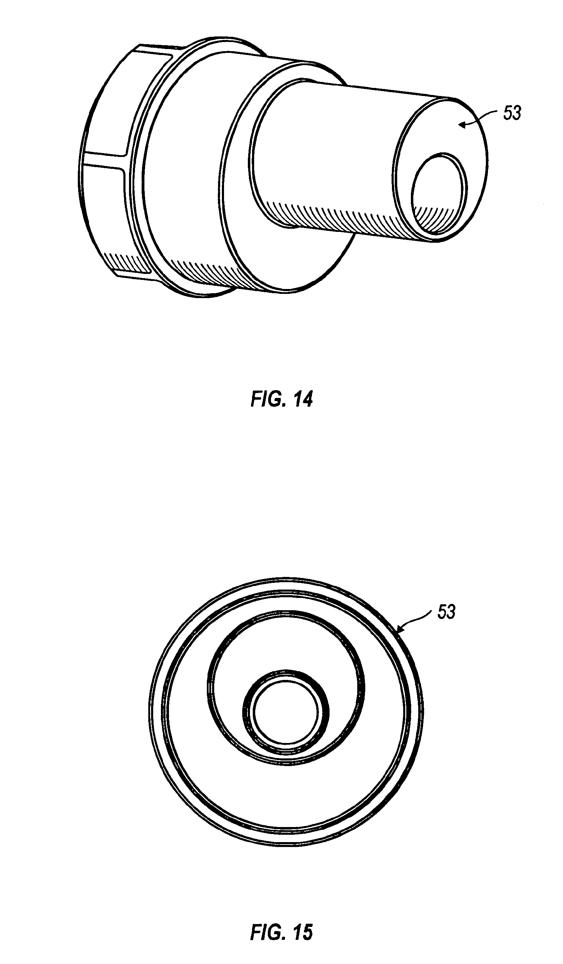

In order to be able to adjust the second pair of rollers 52, forward and back, each of the rollers of the second pair of rollers 52 is an adjustable eccentric roller. This enables adjustment of the distance between paired rollers of the first 51 and second roller pairs 52 to permit the assurance of a snug fit of each roller against the adjacent extremity of the drill column body 4. The foundation of each eccentric roller is an eccentric hub as illustrated in Figs. 14 and 15.

In summary, the present description discloses a stabilized carriage-on-column drill press that has protective plastic-type strips for protecting lateral sides of the drill press column from pressing forces and impact strikes, and particulaly those associated with wrench-releasing a stuck bit from a drill chuck.

### Industrial Applicability

This invention has industrial applicability in the area of drill stands and specifically drill stands designed for cutting bores in concrete surfaces.

## Claims

1. A drill column for a drill stand, said drill column comprising:
an elongate drill column body (4) having a longitudinal axis, a lower end configured to be mounted to a base plate (2) and a front portion (46) configured to receive a longitudinally reciprocating drill carriage (3), said elongate drill column body comprising:
a first pair of longitudinally oriented roller tracks (47, 47') formed in a forward surface of the elongate body and a second pair of longitudinally oriented roller tracks (48,48') opposingly arranged relative said first pair of roller tracks (47, 47') and located rearward of said first pair of roller tracks (47, 47');
a pair of longitudinally elongate, laterally projecting extremities, each of which is interposed between one track of the first pair of roller tracks (47, 47') and one track of the second pair of roller tracks (48,48'); and
each of the pair of extremities has an elongate, longitudinally oriented, outboard side constituting a lateral-most portion of the elongate body; **characterized by**
a bumper (50, 50') installed in a bumper receiver (49, 49') formed at each of said outboard sides and configured to position the bumper (50, 50') installed therein as a protective side-cap against damaging side impacts to the drill column.

2. The drill column (4) as recited in claim 1, wherein at least one of the first and second pairs of longitudinally oriented roller tracks (47, 48) comprises a pair of generally V-shaped roller tracks.

3. The drill column (4) as recited in claim 2, wherein one of the first and second pair of longitudinally oriented roller tracks (47, 48) comprises a pair of generally V-shaped roller tracks.

4. The drill column (4) as recited in claim 3, wherein the other of the first and second pair of longitudinally oriented roller tracks (47, 48) comprises a pair of generally flat-shaped roller tracks.

5. The drill column (4) as recited in claim 4, wherein the first and second pair of longitudinally oriented roller tracks (47, 48) each have a generally equal widthwise spacing between the two roller tracks constituting the respective pair of roller tracks.

6. The drill column (4) as recited in claim 5, wherein the first and second pair of longitudinally oriented roller tracks (47, 48) are oriented one behind the other relative the forward surface (46) of the elongate drill column (4) body.

7. The drill column (4) as recited in claim 4, wherein the first pair of longitudinally oriented roller tracks (47, 48) comprises a pair of generally V-shaped roller tracks.

8. The drill column (4) as recited in claim 7, wherein the first and second pair of longitudinally oriented roller tracks (47, 48) each have a generally equal widthwise spacing between the two roller tracks (47, 48) constituting the respective pair of roller tracks (47, 48).

9. The drill column (4) as recited in claim 8, wherein the first and second pair of longitudinally oriented roller tracks (47, 48) are oriented one behind the other relative the forward surface (46) of the elongate drill column body.

10. The drill column (4) as recited in claim 1, wherein each bumper receiver (49, 49') comprises at least one elongate slot recessed into an incorporating extremity and further comprising an elongate bumper (50, 50') having an insert portion installed in a bumper receiver wherein said elongate bumper (50, 50') has a shield portion constituting a protective side-cap to the extremity incorporating the bumper receiver (49, 49') and said elongate bumper (50,50') extends along one of an upper portion of the drill column (4), at least a half of a length of the drill column (4), at least three-quarters of a length of the drill column (4), a substantial entirety of a length of the drill column (4).

11. The drill column (4) as recited in claim 1, further comprising a drill carriage (3) reciprocatively mounted on the drill column (4) body, said drill carriage (3) comprising a first pair of rollers (51, 51') engaged upon said first pair of longitudinally oriented roller tracks (47, 47,) and a second pair of rollers (52, 52') engaged upon said second pair of longitudinally oriented roller tracks (48, 48'), and wherein each of the laterally projecting extremities is interposed between one roller of the first pair of rollers (51, 51') and one roller of the second pair of rollers (52, 52').

12. The drill column (4) as recited in claim 11, wherein each of the rollers of the first pair of rollers (51, 51') has a generally V-shaped track engagement portion (47, 47') in a radial cross-sectional view.

13. The drill column (4) as recited in claim 12, wherein each of the rollers of the second pair of rollers (52, 52') has a generally flat-shaped track (48, 48') engagement portion in a radial cross-sectional view.

14. The drill column (4) as recited in claim 13, wherein each of the rollers of the second pair of rollers (52, 52') is an adjustable eccentric roller (53).

15. The drill column (4) as recited in claim 14, wherein the eccentric rollers (53) are adjusted so that each roller snuggly engages a respective roller track (48, 48').

## Patentansprüche

1. Bohrsäule für einen Bohrständer, wobei die Bohrsäule das Folgende umfasst:
einen länglichen Bohrsäulenkörper (4), welcher eine Längsachse, ein unteres Ende, welches dafür konfiguriert ist, an einer Grundplatte (2) befestigt zu werden, und einen Frontabschnitt (46) aufweist, welcher dafür konfiguriert ist, einen sich in Längsrichtung hin- und herbewegenden Bohrwagen (3) aufzunehmen, wobei der längliche Bohrsäulenkörper das Folgende umfasst:
ein erstes Paar in Längsrichtung orientierter Rollenbahnen (47, 47'), welche in einer vorderen Fläche des länglichen Körpers ausgebildet sind, und ein zweites Paar in Längsrichtung orientierter Rollenbahnen (48, 48'), welche dem ersten Rollenbahnenpaar (47, 47') gegenüberliegend und rückwärtig zu dem ersten Rollenbahnenpaar (47, 47') angeordnet sind;
ein Paar in Längsrichtung gestreckter, seitlich hervorstehender Extremitäten, die jeweils zwischen einer Bahn des ersten Rollenbahnenpaars (47, 47') und einer Bahn des zweiten Rollenbahnenpaars (48, 48') angeordnet sind; und
wobei jede Extremität des Extremitätenpaars eine längliche, in Längsrichtung orientierte Außenseite aufweist, welche einen seitlichsten Abschnitt des länglichen Körpers bildet; **gekennzeichnet durch**
einen Stoßfänger (50, 50'), welcher in einer Stoßfängeraufnahme (49, 49') installiert ist, die an jeder der Außenseiten ausgebildet ist und dafür konfiguriert ist, den darin installierten Stoßfänger (50, 50') als schützende Seitenabdeckung gegen schädigende Seitenaufprälle auf die Bohrsäule zu positionieren.

2. Bohrsäule (4) nach Anspruch 1, wobei mindestens eines des ersten und zweiten Paars in Längsrichtung orientierter Rollenbahnen (47, 48) ein Paar im Allgemeinen V-förmiger Rollenbahnen umfasst.

3. Bohrsäule (4) nach Anspruch 2, wobei eines des ersten und zweiten Paars in Längsrichtung orientierter Rollenbahnen (47, 48) ein Paar im Allgemeinen V-förmiger Rollenbahnen umfasst.

4. Bohrsäule (4) nach Anspruch 3, wobei das andere des ersten und zweiten Paars in Längsrichtung orientierter Rollenbahnen (47, 48) ein Paar im Allgemeinen ebener Rollenbahnen umfasst.

5. Bohrsäule (4) nach Anspruch 4, wobei das erste und zweite Paar in Längsrichtung orientierter Rollenbahnen (47, 48) der Breite nach jeweils einen im Allgemeinen gleichen Abstand zwischen den beiden Rollenbahnen aufweist, welche das entsprechende Rollenbahnenpaar bilden.

6. Bohrsäule (4) nach Anspruch 5, wobei das erste und zweite Paar in Längsrichtung orientierter Rollenbahnen (47, 48) relativ zu der vorderen Fläche (46) des länglichen Bohrsäulenkörpers (4) eines hinter dem anderen angeordnet ist.

7. Bohrsäule (4) nach Anspruch 4, wobei das erste Paar in Längsrichtung orientierter Rollenbahnen (47, 48) ein Paar im Allgemeinen V-förmiger Rollenbahnen umfasst.

8. Bohrsäule (4) nach Anspruch 7, wobei das erste und zweite Paar in Längsrichtung orientierter Rollenbahnen (47, 48) der Breite nach jeweils einen im Allgemeinen gleichen Abstand zwischen den beiden Rollenbahnen (47, 48) aufweist, welche das entsprechende Rollenbahnenpaar (47, 48) bilden.

9. Bohrsäule (4) nach Anspruch 8, wobei das erste und zweite Paar in Längsrichtung orientierter Rollenbahnen (47, 48) relativ zu der vorderen Fläche (46) des länglichen Bohrsäulenkörpers eines hinter dem anderen angeordnet ist.

10. Bohrsäule (4) nach Anspruch 1, wobei jede Stoßfängeraufnahme (49, 49') mindestens einen länglichen Spalt aufweist, welcher in eine inkorporierende Extremität ausgespart ist, und welche ferner einen länglichen Stoßfänger (50, 50') umfasst, der einen Einführabschnitt aufweist, der in einer Stoßfängeraufnahme installiert ist, wobei der längliche Stoßfänger (50, 50') einen Abschirmabschnitt aufweist, welcher eine schützende Seitenabdeckung für die Extremität bildet und in welchen die Stoßfängeraufnahme (49, 49') inkorporiert ist, und wobei der längliche Stoßfänger (50, 50') sich entlang einem oberen Abschnitt der Bohrsäule (4), mindestens der Hälfte der Länge der Bohrsäule (4), mindestens drei Viertel der Länge der Bohrsäule (4) oder im Wesentlichen der gesamten Länge der Bohrsäule (4) erstreckt.

11. Bohrsäule (4) nach Anspruch 1, welche ferner einen Bohrwagen (3) umfasst, der hin- und hergehend auf dem Bohrsäulenkörper (4) angebracht ist, wobei der Bohrwagen (3) ein erstes Rollenpaar (51, 51') umfasst, das auf dem ersten Paar in Längsrichtung orientierter Rollenbahnen (47, 47') eingespurt ist, und ein zweites Rollenpaar (52, 52') umfasst, das auf dem zweiten Paar in Längsrichtung orientierter Rollenbahnen (48, 48') eingespurt ist, und wobei jede der seitlich hervorstehenden Extremitäten zwischen einer Rolle des ersten Rollenpaars (51, 51') und einer Rolle des zweiten Rollenpaars (52, 52') angeordnet ist.

12. Bohrsäule (4) nach Anspruch 11, wobei jede der Rollen des ersten Rollenpaars (51, 51') in einer radialen Querschnittsansicht einen im Allgemeinen V-förmigen Bahnen(47,47')-Eingriffsabschnitt aufweist.

13. Bohrsäule (4) nach Anspruch 12, wobei jede der Rollen des zweiten Rollenpaars (52, 52') in einer radialen Querschnittsansicht einen im Allgemeinen ebenen Bahnen(48,48')-Eingriffsabschnitt aufweist.

14. Bohrsäule (4) nach Anspruch 13, wobei es sich bei jeder der Rollen des zweiten Rollenpaars (52, 52') um eine einstellbare Exzenterrolle (53) handelt.

15. Bohrsäule (4) nach Anspruch 14, wobei die Exzenterrollen (53) so eingestellt sind, dass jede Rolle eng anliegend in eine entsprechende Rollenbahn (48, 48') einspurt.

## Revendications

1. Colonne de perceuse pour un support de perceuse, ladite colonne de perceuse comprenant :
un corps allongé de colonne de perceuse (4) ayant un axe longitudinal, une extrémité inférieure configurée pour être montée sur une semelle (2) et une partie avant (46) configurée pour recevoir un chariot de perceuse en va-et-vient longitudinalement (3), ledit corps allongé de colonne de perceuse comprenant :
une première paire de glissières de galets orientées longitudinalement (47, 47') formées dans une surface avant du corps allongé et une seconde paire de glissières de galets orientées longitudinalement (48, 48') agencée à l'opposé de ladite première paire de glissières de galets (47, 47') et située à l'arrière de ladite première paire de glissières de galets (47, 47') ;
une paire d'extrémités allongées longitudinalement se projetant latéralement, chacune d'entre elles étant interposée entre une glissière de la première paire de glissières de galets (47, 47') et une glissière de la seconde paire de glissières de galets (48, 48') ; et
chacune de la paire d'extrémités a un côté extérieur allongé orienté longitudinalement constituant une partie la plus latérale du corps allongé ; **caractérisée par**
un butoir (50, 50') installé dans un logement de butoir (49, 49') formé sur chacun desdits côtés extérieurs et configuré pour positionner le butoir (50, 50') installé à l'intérieur de celui-ci en tant que capot latéral de protection contre les impacts latéraux détériorant la colonne de perceuse.

2. Colonne de perceuse (4) selon la revendication 1, dans laquelle au moins l'une des première et seconde paires de glissières de galets orientées longitudinalement (47, 48) comprend une paire de glissières de galets de forme généralement en V.

3. Colonne de perceuse (4) selon la revendication 2, dans laquelle l'une des première et seconde paires de glissières de galets orientées longitudinalement (47, 48) comprend une paire de glissières de galets de forme généralement en V.

4. Colonne de perceuse (4) selon la revendication 3, dans laquelle l'autre des première et seconde paires de glissières de galets orientées longitudinalement (47, 48) comprend une paire de glissières de galets de forme généralement plate.

5. Colonne de perceuse (4) selon la revendication 4, dans laquelle les première et seconde paires de glissières de galets orientées longitudinalement (47, 48) ont chacune un espacement dans le sens de la largeur généralement égal entre les deux glissières de galets constituant la paire respective de glissières de galets.

6. Colonne de perceuse (4) selon la revendication 5, dans laquelle les première et seconde paires de glissières de galets orientées longitudinalement (47, 48) sont orientées l'une derrière l'autre par rapport à la surface avant (46) du corps allongé de colonne de perceuse (4).

7. Colonne de perceuse (4) selon la revendication 4, dans laquelle la première paire de glissières de galets orientées longitudinalement (47, 48) comprend une paire de glissières de galets de forme généralement en V.

8. Colonne de perceuse (4) selon la revendication 7, dans laquelle les première et seconde paires de glissières de galets orientées longitudinalement (47, 48) ont chacune un espacement dans le sens de la largeur généralement égal entre les deux glissières de galets (47, 48) constituant la paire respective de glissières de galets (47, 48).

9. Colonne de perceuse (4) selon la revendication 8, dans laquelle les première et seconde paires de glissières de galets orientées longitudinalement (47, 48) sont orientées l'une derrière l'autre par rapport à la surface avant (46) du corps allongé de colonne de perceuse.

10. Colonne de perceuse (4) selon la revendication 1, dans laquelle chaque logement de butoir (49, 49') comprend au moins une rainure allongée et évidée dans une extrémité l'incorporant et comprenant en outre un butoir allongé (50, 50') ayant une partie d'insertion installée dans un logement de butoir, dans laquelle ledit butoir allongé (50, 50') a une partie de bouclier constituant un capot latéral de protection sur l'extrémité incorporant le logement de butoir (49, 49') et ledit butoir allongé (50, 50') s'étend le long d'une partie supérieure de la colonne de perceuse (4), sur au moins une moitié d'une longueur de la colonne de perceuse (4), sur au moins les trois-quarts d'une longueur de la colonne de perceuse (4), sur sensiblement l'intégralité d'une longueur de la colonne de perceuse (4).

11. Colonne de perceuse (4) selon la revendication 1, comprenant en outre un chariot de perceuse (3) monté de manière à pouvoir se déplacer en va-et-vient sur le corps de la colonne de perceuse (4), ledit chariot de perceuse (3) comprenant une première paire de galets (51, 51') engagés sur ladite première paire de glissières de galets orientées longitudinalement (47, 47') et une seconde paire de galets (52, 52') engagés sur ladite seconde paire de glissières de galets orientées longitudinalement (48, 48'), et dans laquelle chacune des extrémités se projetant latéralement est interposée entre un galet de la première paire de galets (51, 51') et un galet de la seconde paire de galets (52, 52').

12. Colonne de perceuse (4) selon la revendication 11, dans laquelle chacun des galets de la première paire de galets (51, 51') a une partie d'engagement de glissière de forme généralement en V (47, 47') dans une vue en coupe radiale.

13. Colonne de perceuse (4) selon la revendication 12, dans laquelle chacun des galets de la seconde paire de galets (52, 52') a une partie d'engagement de glissière de forme généralement plate (48, 48') dans une vue en coupe radiale.

14. Colonne de perceuse (4) selon la revendication 13, dans laquelle chacun des galets de la seconde paire de galets (52, 52') est un galet excentrique ajustable (53).

15. Colonne de perceuse (4) selon la revendication 14, dans laquelle les galets excentriques (53) sont ajustés de sorte que chaque galet s'engage étroitement dans une glissière de galet respective (48, 48').
